# EUROPÄISCHE PATENTSCHRIFT

(11) **EP 1 125 070 B1**
(45) Veröffentlichungstag und Bekanntmachung des Hinweises auf die Patenterteilung: **31.07.2002**
(21) Anmeldenummer: 99950750.2
(22) Anmeldetag: 16.10.1999
(51) Int. Cl.: F16H 7/12

(54) **SPANNEINRICHTUNG FÜR EIN ZUGMITTEL**
CLAMPING DEVICE FOR A TRACTION MEANS
DISPOSITIF DE SERRAGE DESTINE A UN MOYEN DE TRACTION

(30) Priorität: 29.10.1998 DE 19849659
(43) Veröffentlichungstag der Anmeldung: 22.08.2001
(73) Patentinhaber: INA Wälzlager Schaeffler oHG, 91074 Herzogenaurach (DE)
(72) Erfinder: BÖGL, Arno, D-74653 Künzelsau-Gaisbach (DE); POLSTER, Rudolf, D-91083 Baiersdorf (DE)
(86) Internationale Anmeldenummer: EP9907861
(87) Internationale Veröffentlichungsnummer: WO0026560

(56) Entgegenhaltungen:
- EP-A- 0 486 984
- CH-A- 351 470
- DE-A- 4 243 451
- US-A- 2 954 726

## Beschreibung

### Anwendungsgebiet der Erfindung

Die Erfindung betrifft eine Spanneinrichtung für ein Zugmittel einer Antriebsanordnung, bestehend aus einer Spanner-Dämpfer-Einheit, einem an dem Zugmittel anliegenden ersten Spannmittel und einem an dem Zugmittel anliegenden zweiten Spannmittel mit folgenden Merkmalen:
- Die Spanner-Dämpfer-Einheit wirkt zwischen einem ersten Schwenkhebel und einem zweiten Schwenkhebel,
- das erste Spannmittel ist mit dem ersten Schwenkhebel verbunden,
- der erste Schwenkhebel ist an einem Schwenkpunkt um eine ortsfeste erste Schwenkachse schwenkbar gelagert,
- das erste Spannmittel ist, unter Wirkung der Spannkraft der Spanner-Dämpfer-Einheit, mittels des ersten Schwenkhebels, gegen ein erstes Trum gespannt,
- das zweite Spannmittel ist mit dem zweiten Schwenkhebel verbunden,
- der zweite Schwenkhebel ist an einem Schwenkpunkt um eine ortsfeste zweite Schwenkachse schwenkbar gelagert,
- das zweite Spannmittel ist, unter Wirkung der Spannkraft der Spanner-Dämpfer-Einheit, mittels des zweiten Schwenkhebels, gegen ein zweites Trum gespannt,
- zwischen dem ersten Trum und dem zweiten Trum ist eine Umlenkscheibe für das Zugmittel angeordnet und
- das erste Trum und das zweite Trum sind ungleichen Zugkräften ausgesetzt.

### Hintergrund der Erfindung

Eine derartige Spanneinrichtung ist aus DE 42 43 451 A1 vorbekannt. Die Spanneinrichtung ist aus zwei Schwenkhebeln mit jeweils einem Spannmittel, einem Spanner und einem zwischen den Schwenkhebeln vorgesehenen Dämpfungsmittel gebildet. Die Spannmittel sind vorzugsweise als Spannrollen ausgebildet. Die Schwenkhebel sind mit einem Ende jeweils ortsfest und schwenkbar zueinander an einer Schwenkachse befestigt. An dem anderen Ende der Schwenkhebel ist drehbar jeweils eine Spannrolle fixiert. Die Schwenkhebel sind, unter Wirkung der Spannkraft des Spanners, über ihre Spannrollen jeweils gegen das Zugmittel vorgespannt, wobei der eine Schwenkhebel gegen ein Leertrum und der andere Schwenkhebel gegen ein Lasttrum wirkt. Zwischen den Schwenkhebeln ist ein gleichermaßen auf beide Schwenkhebel wirkendes Dämpfungselement angeordnet. Der Spanner wirkt gleichzeitig durch die Zug- oder Druckkraft seines Federsystems auf beide Schwenkhebel. Vorzugsweise sind Spanner und Dämpfer gemeinsam zu einer Spanner-Dämpfer-Einheit in einer Baugruppe zusammengefaßt.

Als Trum bezeichnet man den Teil eines Zugmittels, der zwischen zwei benachbarten Umlenkscheiben einer Antriebsanordnung liegt. Die Umlenkscheibe kann dabei
- als reine Umlenkeinrichtung für das Zugmittel wirken. Der Antriebsanordnung wird dabei durch die Umlenkscheibe keine oder nur unwesentlich Leistung entzogen.
- als Umlenkeinrichtung und gleichzeitig getriebene Scheibe wirken, beispielsweise als Scheibe eine Generators. Der Antriebsanordnung wird dabei Leistung entzogen.
- als Umlenkscheibe und treibende Scheibe wirken, beispielsweise als Riemenscheibe einer Kurbelwelle. Der Antriebsanordnung wird dabei Leistung zugeführt.

In einer Antriebsanordnung ist der Leertrum der Teil des Zugmittels, der sich einer treibenden Scheibe in Dreh- und damit Treibrichtung anschließt, während der Lasttrum der gezogene Teil des Zugmittels ist, der, entgegengesetzt der Treibrichtung, der treibenden Scheibe direkt folgt und/oder in dieser Richtung zwischen zwei getriebenen Scheiben angeordnet ist. Ein Leertrum ist demnach anderen Zugkräften ausgesetzt als ein Lasttrum, d. h. die Zugkräfte im Leertrum sind niedriger als die im Lasttrum.

Aufgabe einer derartigen Spanner-Dämpfer-Einheit ist es, die während des Betriebes des Zugmittels oder im Verlaufe seines Betriebes entstehenden, und insbesondere im Leertrum wirkenden, Längenänderungen des Zugmittels auszugleichen und gleichzeitig die Folgen ungleichförmiger Drehzahl der treibenden Scheibe, z. B. der Riemenscheibe einer Kurbelwelle, zu kompensieren. Längenänderungen des Zugmittels werden ausgeglichen, um über die gesamte Betriebsdauer der Antriebsanordnung in allen Betriebszuständen ein gleichmäßiges Umschlingen der Umlenkscheiben durch das Zugmittel zu gewährleisten. Ungleichförmigkeiten werden durch das Dämpfungselement kompensiert, um die getriebenen Scheiben und die daran angeschlossenen Aggregate von Ungleichförmigkeiten der Drehzahl freizuhalten. Durch ein gleichmäßiges, d. h. schlupffreies, Umschlingen der getriebenen Scheiben wird die Antriebsleistung mit geringen Verlusten übertragen. Das Zugmittel ist dabei hohen Beanspruchungen ausgesetzt. Zielstellung ist es, die durch den Spanner auf das Trum wirkende Spannkraft dem jeweiligen Leistungsbedarf oder der Leistungsabgabe der zugeordneten Umlenkscheibe anzupassen. Wenn geringe Leistung benötigt wird heißt das, daß das Zugmittel auch nur mit geringer Spannkraft vorgespannt werden sollte. Bei höherem Leistungsfluß muß damit auch die Spannkraft höher sein. Das Zugmittel sollte also idealer Weise nur so hoch belastet werden, wie der tatsächliche Leistungsfluß es erfordert.

Die ideale Belastung des Zugmittels gestaltet sich schwierig, wenn die Spanneinrichtung von einem zu spannenden Trum zum anderen zu spannenden Trum unterschiedliche Spannkräfte aufbringen muß, um das Zugmittel jeweils ideal zu belasten. Das ist z. B. dann der Fall, wenn eine Spanneinrichtung zwischen einem links und einem rechts einer Umlenkscheibe angeordnetem Trum eingesetzt werden soll, und das linke Trum, abhängig vom Betriebszustand der Antriebsanordnung, einmal ein Lasttrum und dabei das rechte Trum ein Leertrum bildet und das linke Trum ein anderes Mal ein Leertrum und dabei das rechte Trum ein Lasttrum bildet. Ein Beispiel dazu bilden links und rechts einer Riemenscheibe einer Starter-Generator-Einheit anschließende Trume, die in einen Riementrieb eines Verbrennungsmotors integriert sind. Wirkt der Generator als Starter, so ist der Trum zwischen der Riemenscheibe der Starter-Generator-Einheit sowie der Riemenscheibe der Kurbelwelle ein Lasttrum und der sich auf der anderen Seite der Riemenscheibe der Starter-Generator-Einheit anschließende Trum ein Leertrum. Ist der Verbrennungsmotor gestartet, wird der Riemen in gleiche Dreh- und Treibrichtung durch die Riemenscheibe der Kurbelwelle geschleppt und der Trum zwischen der Riemenscheibe der Starter-Generator-Einheit und der Riemenscheibe der Kurbelwelle ist ein Leertrum, während der sich auf der anderen Seite der Riemenscheibe der Starter-Generator-Einheit anschließende Trum ein Lasttrum ist.

Während des Startvorganges sind die Kräfte in dem Lasttrum zwischen der Riemenscheibe der Starter-Generator-Einheit und der Riemenscheibe der Kurbelwelle sehr hoch, da beim Starten des Verbrennungsmotors durch die Starter-Generator-Einheit die Schleppmomente zum Anschleppen der Kurbelwelle sehr hoch sind. Die Kräfte des auf der anderen Seite der Riemenscheibe der Starter-Generator-Einheit anschließenden Trums, sind wenn dieses ein Lasttrum ist, nicht so hoch, da in diesem Fall die Aggregate durch die treibende Kurbelwelle geschleppt werden. Wenn, wie anfangs beschrieben, der Riemen nur entsprechend dem Leistungsfluß, und damit den wirkenden Kräften, ideal vorgespannt werden soll, muß also die Spanner-Dämpfer-Einheit abhängig von den genannten Betriebszuständen des Verbrennungsmotors mit unterschiedlichen Kräften auf das jeweilige Trum wirken.

Nachteilig ist, daß mit einer Spanneinrichtung oder Spanner-Dämpfer-Einheit nach dem Stand der Technik in einer oben beschriebenen Anordnung, die Spannkraftverteilung auf die Umlenkscheiben nicht befriedigend ist. Sollen der linke und der rechte Trum ihren Belastungen entsprechend vorgespannt werden, so muß nach dem bisherigen Erkenntnisstand für jeden Trum ein eigens auf dessen Belastung abgestimmter Spanner angeordnet werden. *Ein derartiger Zugmitteltrieb des Standes der Technik ist in US-A 2 954 726 beschrieben. In dieser Antriebsanordnung bildet eine Kette das Zugmittel. Die Antriebsanordnung kann wahlweise in und entgegen dem Uhrzeigersinn betrieben werden*. *Die einander gegenüberliegenden Trume sind jeweils mit einer Spannrolle an jeweils einem Hebel belastet. Auf jedem dieser Hebel wirkt jeweils ein unabhängig von dem anderen Hebel am anderen Trum operierendes Federsystem. Eine darartige Lösung wirkt sich aufgrund der doppelten Anzahl der Teile* unvorteilhaft auf die Gesamtkosten einer derartigen Antriebsanordnung aus.

### Zusammenfassung der Erfindung

Aufgabe der Erfindung ist es daher, eine Spanneinrichtung zu schaffen,
- die auf zwei Trume mit unterschiedlichen Zugkräften wirkt,
- welche die Trume mit nur einem Spanner vorspannt und
- dabei die Spannkräfte auf die unterschiedlichen Zugkräfte abstimmt.

Diese Aufgabe wird nach dem kennzeichnenden Teil des Anspruches 1 dadurch gelöst, daß die Schwenkhebel der Spanneinrichtung aus Hebelarmen, einem inneren Hebelarm und einem äußeren Hebelarm, gebildet sind, die von dem Schwenkpunkt des jeweiligen Schwenkhebels ausgehen. Das freie Ende des inneren Hebels jedes der beiden Schwenkhebel ist gelenkig an jeweils einem Ende der Spanner-Dämpfer-Einheit angelenkt. Die Spanner-Dämpfer-Einheit ist nicht ortsfest, also nur zwischen den inneren Hebelarmen befestigt und überträgt, unter dämpfender Wirkung, die Spannbetrieb auftretenden Reaktionskräfte zwischen dem ersten sowie dem zweiten Trum. Die Längen des inneren und des äußeren Hebelarmes eines jeden Schwenkhebels sind zueinander in einem definierten Verhältnis ausgebildet. Dieses Verhältnis der Längen ist für jeden der beiden Schwenkhebel unterschiedlich. Es ist auf die von Trum zum Trum abweichenden und für das Spannen des Trums erforderlichen Spannkräfte abgestimmt. Da jeder Schwenkhebel um seinen Schwenkpunkt auf einer ortsfesten Schwenkachse schwenkbar gelagert ist, wird die Spannkraft des Spanners mit der dem Verhältnis entsprechenden Hebelwirkung auf das Spannmittel, und somit den jeweiligen Trum übertragen. Mit dem Verhältnis wird festgelegt, ob die Spannkraft des Spanners durch die Schwenkhebel verstärkt oder gemindert auf das Spannmittel übertragen wird. Die unterschiedlichen spezifischen Verhältnisse der Längen der Schwenkhebel bilden in der Spanneinrichtung ein gemeinsames Hebelsystem. Dieses Hebelsystem verändert seinem Übersetzungsverhältnis entsprechend die von einem Trum zum anderen Trum übertragenen Reaktionskräfte. Der Vorteil einer solchen Spanneinrichtung liegt insbesondere darin,
- daß die Spannkräfte sich von einem Trum zum anderen Trum unterscheidend festgelegt werden können,
- daß eine Änderung der Spannkräfte durch Austausch der Schwenkhebel gegen Schwenkhebel mit einem anderen Verhältnis der Längen möglich ist,
- daß nur eine Spanner-Dämpfer-Einheit benötigt wird,
- daß Spanneinrichtungen mit unterschiedlicher Spann- und Dämpfungscharakteristik durch beliebige Kombination von Spanner-Dämpfer-Einheiten und Schwenkhebeln ausgelegt werden können und
- daß das Zugmittel, entsprechend seiner Betriebsart nur soweit vorgespannt ist, wie es der Leistungsfluß erfordert, und damit von unnötigem Verschleiß befreit ist.

### Kurze Beschreibung der Zeichnung

Die Erfindung wird nachfolgend anhand von einem Ausführungsbeispiel erläutert. Es zeigen:
- Figur 1: die schematische Darstellung eines Riementriebs eines Verbrennungsmotors mit integrierter Starter-Generator-Einheit und einer erfindungsgemäßen Spanneinheit mit der Starter-Generator-Einheit als Starter wirkend,
- Figur 2: die schematische Darstellung des Riementriebes nach Figur 1, mit der Starter-Generator-Einheit als Generator wirkend,
- Figur 3: die schematische Darstellung des Riementriebes nach Figur 1, mit der Darstellung der unterschiedlichen Postionen der Spanneinheit im Betrieb der Starter-Generator-Einheit als Starter im Vergleich zum Betrieb dieser Einheit als Generator.

### Detaillierte Beschreibung der Zeichnung

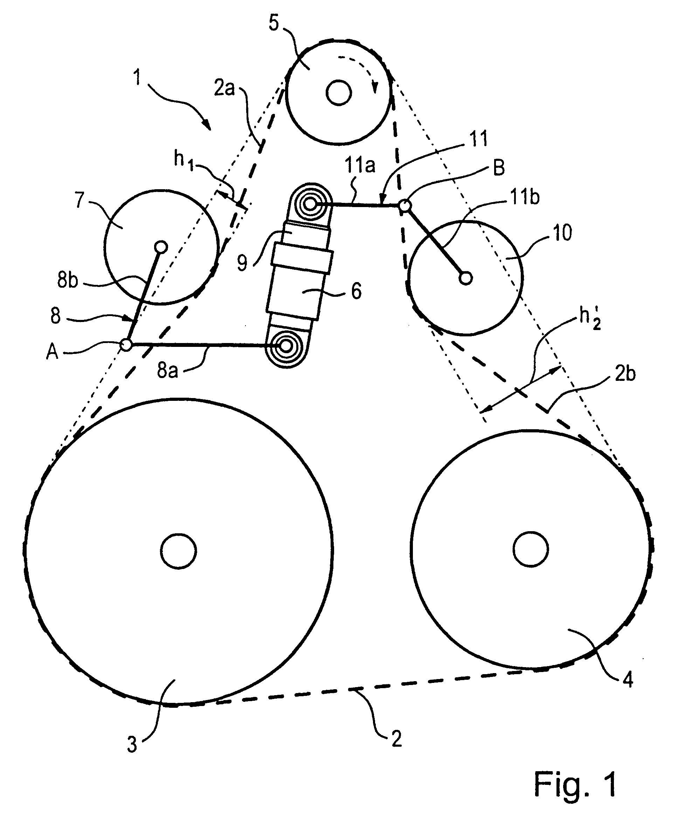

In Figur 1 ist mit 1 ein Riementrieb eines Verbrennungsmotors bezeichnet. Der Riementrieb besteht aus dem gestrichelt dargestellten Riemen 2, der Riemenscheibe der Kurbelwelle 3, der Riemenscheibe für ein nicht weiter beschriebenes Aggregat 4, einer Riemenscheibe für eine Starter-Generator-Einheit 5 und einer Spanneinrichtung 6. Der Riemen ist um die Riemenscheibe der Kurbelwelle 3, die Riemenscheibe der Starter-Generator-Einheit 5 und die Riemenscheibe des Aggregates 4 gelegt und bildet zwischen der Riemenscheibe der Kurbelwelle 4 und der Riemenscheibe für die Starter-Generator-Einheit 5 ein erstes Trum 2a und zwischen der Riemenscheibe für die Starter-Generator-Einheit 5 und der Riemenscheibe für das Aggregat 4 ein zweites Trum 2b.

Die Riemenscheibe für die Starter-Generator-Einheit 5 schleppt im Startbetrieb, durch den Riemen, die Riemenscheibe der Kurbelwelle 3 und die Riemenscheibe des Aggregates 4. Der Riemen wird am ersten Trum 2a und am zweiten Trum 2b durch die Spannvorrichtung 6 vorgespannt. Dabei liegt am ersten Trum 2a eine erste Spannrolle 7 an, die über einen ersten Schwenkhebel 8 mit einer Spanner-Dämpfer-Einheit 9 verbunden ist. Der zweite Trum 2b wird durch eine zweite Spannrolle 10 vorgespannt. Die zweite Spannrolle 10 ist über einen zweiten Schwenkhebel 11 mit der Spanner-Dämpfer-Einheit 9 verbunden.

Die Spanner-Dämpfer-Einheit ist nicht ortsfest am Verbrennungsmotor befestigt, sondern schwimmend zwischen dem ersten Schwenkhebel 8 und dem zweiten Schwenkhebel 11 gelagert. Die Spanneinrichtung 6 ist an den Schwenkpunkten A und B am Verbrennungsmotor befestigt. Dabei ist der erste Schwenkhebel 8 schwenkbar auf der Schwenkachse A und der zweite Schwenkhebel 11 schwenkbar auf der Schwenkachse B gelagert.

Die Spanner-Dämpfer-Einheit 9 spannt die erste Spannrolle 7 gegen das erste Trum 2a. Dabei wirkt die Übersetzung, die sich aus dem Verhältnis der Längen eines inneren Hebelarmes 8a und einem äußeren Hebelarm 8b ergibt. Die zweite Spannrolle 10 wird unter Wirkung einer Übersetzung vorgespannt, die sich aus einem Verhältnis der Längen eines inneren Hebelarmes 11a und eines äußeren Hebelarmes 11 b ergibt.

Im Startbetrieb schleppt die Riemenscheibe der Starter-Generator-Einheit 5 die Riemenscheibe der Kurbelwelle 3 und die Riemenscheibe des Aggregates 4. Die Riemenscheiben 3, 4, 5 drehen dabei in Uhrzeigerrichtung. Der erste Trum 2a ist in diesem Fall ein Lasttrum und federt unter Wirkung der Spanneinrichtung 6 um den Betrag h, ein. Durch h, wird die Lageabweichung des Trums 2a von einer gedachten theoretischen Idealpostion im Startbetrieb beschrieben. Das zweite Trum 2b weicht um den Betrag h₂' von seiner theoretischen Idealposition ab.

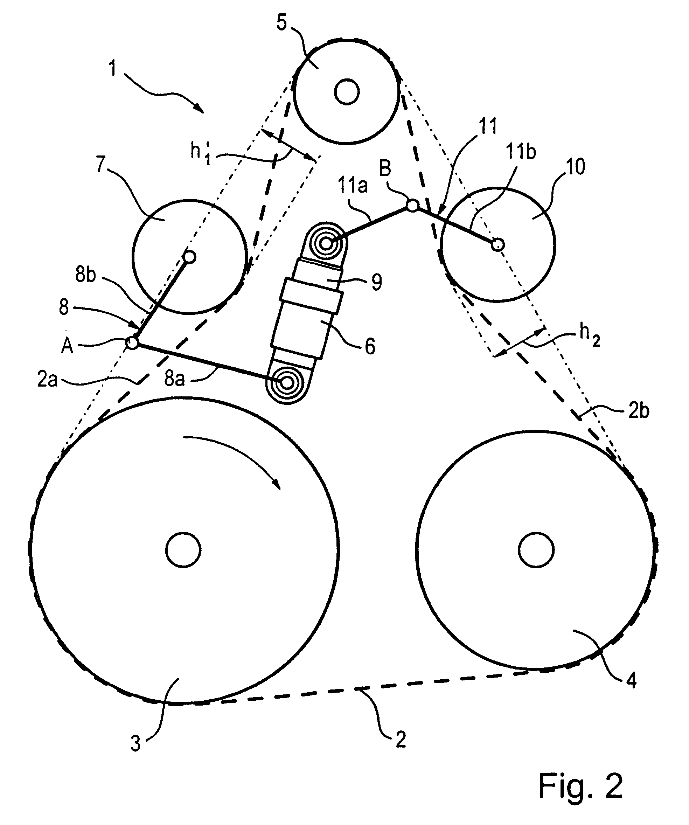

In Figur 2 wird das Schema des Riementriebs 1 dargestellt, jedoch schleppt, im Gegensatz zu der Darstellung in Figur 1, die Riemenscheibe der Kurbelwelle 3 die Riemenscheibe des Aggregates 4 und die Riemenscheibe für die Starter-Generator-Einheit 5. Das erste Trum 2a ist ein Leertrum während das zweite Trum 2b in diesem Fall ein Lasttrum bildet. Die Starter-Generator-Einheit wirkt in diesem Falle als Generator. Unter der Wirkung der Spanneinrichtung 6 weicht der erste Trum 2a von seiner gedachten theoretischen Idealpositon um den Betrag h₁' ab während sich der zweite Trum 2b von seiner gedachten theoretischen Ideallage um den Betrag h2 entfernt hat.

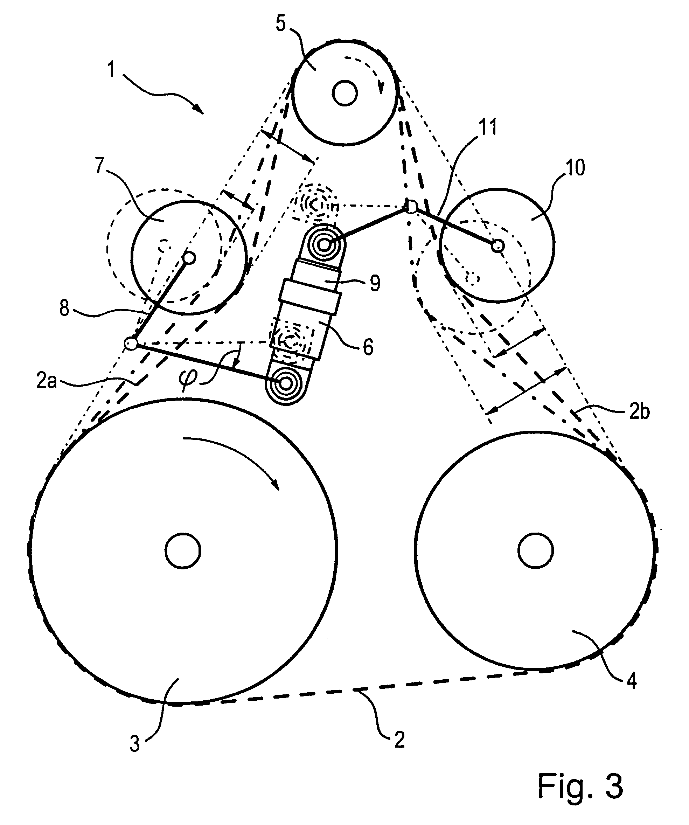

In Figur 3 sind die Positionen der Spanneinheit 6 des Riementriebes 1 aus den Figuren 1 und 2 übereinandergezeichnet dargestellt. Diese Darstellung soll einen Vergleich der Positionen der Spanneinrichtung 6 während des Schleppbetriebes durch die Starter-Generator-Einheit, dargestellt in Figur 1, und im Schleppbetrieb durch die Kurbelwelle, dargestellt in Figur 2, erleichtern. Die gestrichelte und abgebrochene Darstellung der Spanneinheit 6 stellt die Position dieser Spanneinheit 6 während des Schleppbetriebes durch die Starter-Generator-Einheit dar. Werden die Aggregate des Riementriebs 1 durch die Riemenscheibe der Starter-Generator-Einheit 5 geschleppt, so sind die Zugkräfte im Trum 2b gering und im Trum 2a höher, da der Trum 2a den Lasttrum bildet. Der Lasttrum setzt der Spannkraft der Spanneinrichtung 6 einen Widerstand entgegen, so daß der Riemen 2 an der Seite des Trums 2a nur um den Betrag h1 vorgespannt ist. Auf der anderen Seite der Riemenscheibe der Starter-Generator-Einheit 5 lenkt der Riemen um einen entsprechend größeren Betrag h₂' aus, da der Trum 2b in dieser Betriebsart einen Leertrum mit geringern Zugkräften im Riemen 2 bildet. Ist der Verbrennungsmotor gestartet, übernimmt die Riemenscheibe der Kurbelwelle 3 das Schleppen der Aggregate des Riementriebes 1. Im Trum 2a werden die Zugkräfte geringer, im Trum 2b dagegen höher. Der Trum 2b wird zum Lasttrum und der Riemen 2 strafft sich damit auf der Seite des Trums 2b. Die zweite Spannrolle 10 wird durch den Riemen 2 nach außen bewegt und überträgt diese Bewegung als Schwenkbewegung über den Schwenkhebel 11 um den Punkt B auf die Spanner-Dämpfer-Einheit 9. Durch die Spanner-Dämpfer-Einheit 9 wird diese Bewegung auf den ersten Schwenkhebel 8 übertragen, der um den Schwenkpunkt A mit dem Winkel ϕ schwenkt. Die erste Spannrolle 7 spannt unter Wirkung dieser Schwenkbewegung das Trum 2a um den größeren Betrag h₁' vor.

### Bezugszahlen

- 1: Riementrieb
- 2: Riemen
- 2a: erstes Trum
- 2b: zweites Trum
- 3: Riemenscheibe der Kurbelwelle
- 4: Riemenscheibe eines Aggregates
- 5: Riemenscheibe für eine Starter-Generator-Einheit
- 6: Spanneinrichtung
- 7: erste Spannrolle
- 8: erster Schwenkhebel
- 8a: innerer Hebelarm des ersten Schwenkhebels
- 8b: äußerer Hebelarm des ersten Schwenkhebels
- 9: Spanner-Dämpfer-Einheit
- 10: zweite Spannrolle
- 11: zweiter Schwenkhebel
- 11a: innerer Hebelarm des zweiten Schwenkhebels
- 11b: äußerer Hebelarm des zweiten Schwenkhebels

## Patentansprüche

1. Spanneinrichtung (1) für ein Zugmittel (2) einer Antriebsanordnung, bestehend aus einer Spanner-Dämpfer-Einheit (9), einem an dem Zugmittel (2) anliegenden ersten Spannmittel (7) und einem an dem Zugmittel (2) anliegenden zweiten Spannmittel (10) mit folgenden Merkmalen:
• Die Spanner-Dämpfer-Einheit (9) wirkt zwischen einem ersten Schwenkhebel (8) und einem zweiten Schwenkhebel (11),
• das erste Spannmittel (7) ist mit dem ersten Schwenkhebel (8) verbunden,
• der erste Schwenkhebel (8) ist an einem Schwenkpunkt um eine ortsfeste erste Schwenkachse schwenkbar gelagert,
• das erste Spannmittel (7) ist, unter Wirkung der Spannkraft der Spanner-Dämpfer-Einheit (9), mittels des ersten Schwenkhebels (8), gegen ein erstes Trum (2a) gespannt,
• das zweite Spannmittel (10) ist mit dem zweiten Schwenkhebel (11) verbunden,
• der zweite Schwenkhebel (11) ist an einem Schwenkpunkt um eine ortsfeste zweite Schwenkachse schwenkbar gelagert,
• das zweite Spannmittel (10) ist, unter Wirkung der Spannkraft der Spanner-Dämpfer-Einheit (9), mittels des zweiten Schwenkhebels (11), gegen ein zweites Trum (2b) gespannt und
• zwischen dem ersten Trum (2a) und dem zweiten Trum (2b) ist eine Umlenkscheibe für das Zugmittel (5) angeordnet und
• das erste Trum (2a) sowie das zweite Trum (2b) sind ungleichen Zugkräften ausgesetzt,
**gekennzeichnet durch** folgende Merkmale:
• der erste Schwenkhebel (8) und der zweite Schwenkhebel (11) sind jeweils **durch** einen von ihrem Schwenkpunkt ausgehenden inneren Hebelarm (8a, 11a) sowie **durch** einem von ihrem Schwenkpunkt ausgehenden äußeren Hebelarm (8b, 11b) gebildet,
• das freie Ende des äußeren Hebelarmes (8a, 11b) ist mit dem ihm jeweils zugeordneten Spannmittel (7,10) verbunden,
• das freie Ende des inneren Hebelarms (8b, 11a) ist jeweils mit einem Ende der Spanner-Dämpfer-Einheit (9) gelenkig verbunden,
• die Spanner-Dämpfer-Einheit (9) ist schwimmend zwischen den inneren Hebelarmen (8b, 11a) gelagert und überträgt die im Spannbetrieb auftretenden Reaktionskräfte zwischen dem ersten Trum (2a) sowie dem zweiten Turm (2b),
• die Länge des inneren Hebelarms (8a) sowie des äußeren Hebelarmes (8b) des ersten Schwenkhebels (8) und die Länge des inneren Hebelarmes (11a) sowie die Länge des äußeren Hebelarmes (11b) des zweiten Schwenkhebels (11) bilden ein Verhältnis, das auf die ungleichen Zugkräfte abgestimmt ist,
• die Länge des inneren Hebelarmes (8a) sowie des äußeren Hebelarmes (8b) des ersten Schwenkhebels (8) bilden ein Verhältnis, das am ersten Trum (2a) eine Vorspannkraft erzeugt, die sich in ihrer Größe von der Vorspannkraft unterscheidet, die der zweite Schwenkhebel (11) am zweiten Trum (2b) erzeugt.

2. Spanneinrichtung nach Anspruch 1 **dadurch gekennzeichnet, daß** die Spanner-Dämpfer-Einheit (9) durch einen hydraulischen Riemenspanner gebildet ist.

3. Spanneinrichtung nach Anspruch 1 **dadurch gekennzeichnet, daß** das Zugmittel einen Riemen (2) eines Riementriebes (1) einer Verbrennungskraftmaschine und die Umlenkscheibe die Riemenscheibe einer Starter-Generator-Einheit (5) bildet.

## Claims

1. Tensioning device (1) for a traction element (2) of a drive arrangement, said tensioning device comprising a tensioner-damper unit (9), a first tension element (7) in contact with the traction element (2) and a second tension element (10) in contact with the traction element (2), with the following features:
• the tensioner-damper unit (9) acts between a first pivoting lever (8) and a second pivoting lever (11),
• the first tension element (7) is connected to the first pivoting lever (8),
• the first pivoting lever (8) is mounted on a fulcrum for pivoting about a first fixed axis of pivot,
• under the action of the tensioning force of the tensioner-damper unit (9), the first tension element (7) is urged by the first pivoting lever (8) against a first strand 2a,
• the second tension element (10) is connected to the second pivoting lever (11),
• the second pivoting lever (11) is mounted on a fulcrum for pivoting about a second fixed axis of pivot,
• under the action of the tensioning force of the tensioner-damper unit (9), the second tension element (10) is urged by the second pivoting lever (11) against a second strand (2b), and
• a deflector pulley for the traction element (5) is arranged between the first strand 2a and the second strand 2b, and
• the first strand (2a) and the second strand (2b) are subjected to unequal tractive forces,
**characterised by** the following features:
• the first pivoting lever (8) and the second pivoting lever (11) are formed, each one, by an inner lever arm (8a, 11a) starting from its fulcrum and by an outer lever arm (8b, 11 b) starting from its fulcrum,
• the free end of the outer lever arm (8a, 11b) is connected to the respective tension element (7, 10) associated thereto,
• the free end of each inner lever arm (8b, 11a) is articulated on one end of the tensioner-damper unit (9),
• the tensioner-damper unit (9) *is float-mounted between the inner lever arms (8b, 11a) and* transmits the reaction forces occurring during the tensioning operation between the first strand (2a) and the second strand (2b),
• the length of the inner lever arm (8a) and of the outer lever arm (8b) of the first pivoting lever (8) and the length of the inner lever arm (11a) and the length of the outer lever arm (11b) of the second pivoting lever (11) form a ratio that is adapted to the unequal tractive forces,
• the length of the inner lever arm (8a) and of the outer lever arm (8b) of the first pivoting lever (8) form a ratio that produces a pre-stressing force on the first strand (2a), which pre-stressing force is different in magnitude from the pre-stressing force produced by the second pivoting lever (11) on the second strand (2b).

2. Tensioning device according to Claim 1, **characterised in that** the tensioner-damper unit (9) is constituted by a hydraulic belt tensioner.

3. Tensioning device according to Claim 1, **characterised in that** the traction element is a belt (2) of a belt drive (1) of an internal combustion engine, and the deflector pulley is the belt pulley of a starter-generator unit (5).

## Revendications

1. Dispositif de tension (1) pour un moyen d'entraînement (2) dans un agencement de commande, ledit dispositif de tension (1) comprenant un ensemble tendeur-amortisseur (9), un premier moyen de tension (7) qui s'appuie contre le moyen d'entraînement (2) et un second moyen de tension (10) qui s'appuie contre le moyen d'entraînement (2), ayant les caractéristiques qui suivent:
• l'ensemble tendeur-amortisseur (9) agit entre un premier levier pivotant (8) et un second levier pivotant (11),
• le premier moyen de tension (7) est relié au premier levier pivotant (8),
• le premier levier pivotant (8) est monté sur un point d'appui pour pivoter autour d'un premier axe fixe de pivotement,
• sous l'action de la force de tension de l'ensemble tendeur-amortisseur (9), le premier moyen de tension (7) est calé par l'intermédiaire du premier levier pivotant (8) contre un premier brin 2a,
• le second moyen de tension (10) est relié au second levier pivotant (11),
• le second levier pivotant (11) est monté sur un point d'appui pour pivoter autour d'un second axe fixe de pivotement,
• sous l'action de la force de tension de l'ensemble tendeur-amortisseur (9), le second moyen de tension (10) est calé par l'intermédiaire du second levier pivotant (11) contre un second brin (2b),
• une poulie de renvoi pour le moyen d'entraînement (5) est agencée entre le premier brin 2a et le second brin 2b, et
• le premier brin 2a et le second brin 2b sont soumis aux efforts de traction différents,
**caractérisé par** les caractéristiques qui suivent:
• le premier levier pivotant (8) et le second levier pivotant (11) sont constitués, chacun, d'un bras intérieur (8a, 11a) de levier s'étendant à partir de son point d'appui, et d'un bras extérieur (8b, 11b) de levier s'étendant à partir de son point d'appui,
• l'extrémité libre du bras extérieur (8a, 11b) de levier est reliée au moyen respectif de tension (7, 10) qui est associé à elle,
• l'extrémité libre du chaque bras intérieur (8b, 11a) est articulée sur l'une des extrémités de l'ensemble tendeur-amortisseur (9),
• l'ensemble tendeur-amortisseur (9) est monté flottant entre les bras intérieurs (8b, 11a) de levier et transmet entre le premier brin (2a) et le second brin (2b), les forces de réaction qui se produisent pendant l'opération de tensionnement,
• la longueur du bras intérieur (8a) et du bras extérieur (8b) du premier levier pivotant (8) et la longueur du bras intérieur (11a) et la longueur du bras extérieur (11b) du second levier pivotant (11) forment un rapport de proportion qui est adapté aux efforts de traction différents,
• la longueur du bras intérieur (8a) et du bras extérieur (8b) du premier levier pivotant (8) forment un rapport de proportion qui produit sur le premier brin (2a) une force de précontrainte dont la grandeur est différente de la grandeur de la force de précontrainte qui est produite par le second levier pivotant (11) sur le second brin (2b).

2. Dispositif de tension selon la revendication 1, **caractérisé en ce que** l'ensemble tendeur-amortisseur (9) est formé par un tendeur hydraulique de courroie.

3. Dispositif de tension selon la revendication 1, **caractérisé en ce que** le moyen d'entraînement est une courroie (2) d'une commande à courroie (1) d'un moteur à combustion interne, et la poulie de renvoi est la poulie de courroie d'un ensemble démarreur-générateur (5).
